# EUROPEAN PATENT SPECIFICATION

(11) **EP 0 450 611 B1**
(45) Date of publication and mention of the grant of the patent: **19.06.1996**
(21) Application number: 91105305.6
(22) Date of filing: 04.04.1991
(51) Int. Cl.: H01M 6/46, H01M 4/42, H01M 4/50

(54) **A layered-type manganese dry battery**
In Schichten aufgebaute Mangan-Trockenbatterie
Batterie sec à base de manganèse du type stratifié

(30) Priority: 06.04.1990 JP 92416/90
(43) Date of publication of application: 09.10.1991
(73) Proprietor: MATSUSHITA ELECTRIC INDUSTRIAL CO., LTD., Kadoma-shi, Osaka-fu, 571 (JP)
(72) Inventor: Shoji, Yasuhiko, Higashiosaka-shi, Osaka (JP); Sugino, Kazuo, Hirakata-shi, Osaka (JP); Maeda, Tadayoshi, Hirakata-shi, Osaka (JP); Nomura, Tomoo, Kashiwara-shi, Osaka (JP)
(74) Representative: Schwabe - Sandmair - Marx

(56) References cited:
- DE-C- 840 712
- GB-A- 219 769

## Description

### BACKGROUND OF THE INVENTION

### 1. Field of the Invention:

The present invention relates to a layered-type manganese dry battery. More particularly, it relates to a conductive carbon coat, the surface of which is physically treated, the said conductive carbon coat constituting a zinc-carbon bonded electrode (hereinafter referred to as the "bonded electrode") used in a layered manganese dry battery, and to a layered-type manganese dry battery using the bonded electrode.

### 2. Description of the Prior Art:

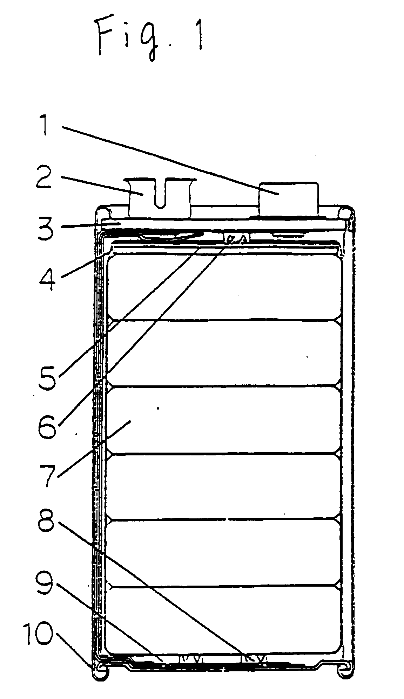

Generally, a layered-type manganese dry battery, which is typified by the 6F22 type, has a structure as shown in Figure 1, in which six unit cells **7** with a positive current collector plate **5** stacked on top of them are held together, coated with wax, and covered with a PVC tube **4**, the contents thus contained in the PVC tube **4** being temporarily clamped in an outer can **10** with a terminal plate **3** and a bottom plate **9** disposed at the top and bottom, respectively.

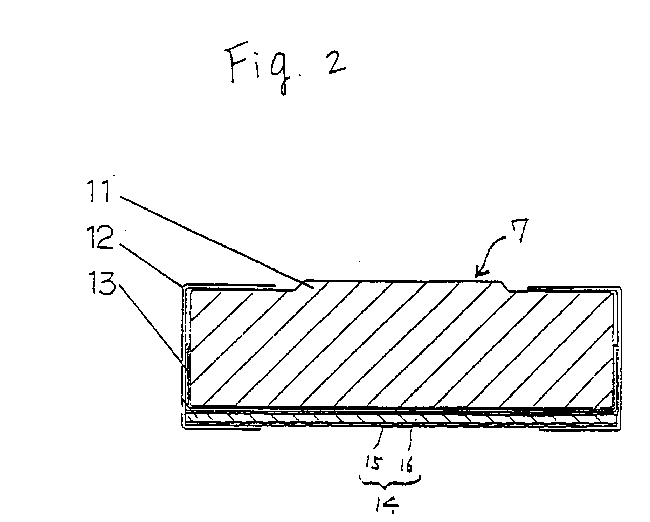

Each unit cell **7** comprises, as shown in Figure 2, a bonded electrode **14** made of a conductive carbon coat **15** integrally bonded to a zinc plate **16**, a positive electrode composition **11**, and a separator **13**, which separates the bonded electrode **14** from the positive electrode composition **11**, all of these being contained in a cell grommet of a PVC tube **12**.

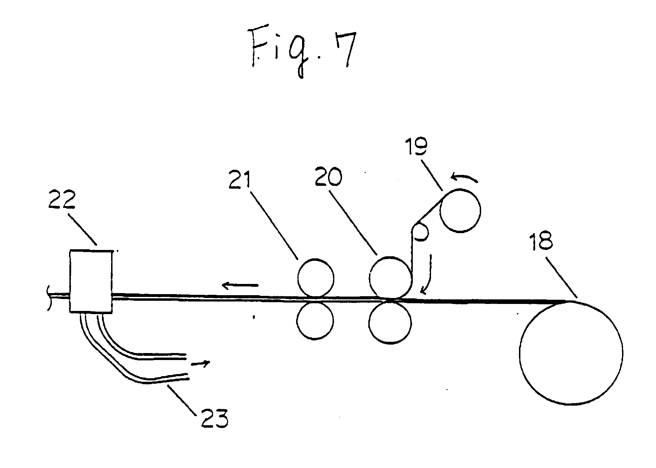

The bonded electrode of a conventional layered-type manganese dry battery has the structure shown in Figure 6, which is composed of a conductive carbon coat **15** and a zinc plate **16**. The conventional bonded electrode is manufactured by either applying a conductive carbon paint to form a conductive carbon coat **15** on one side of the zinc plate **16** that serves as the negative electrode, or by press-fitting the conductive carbon coat **15** onto the zinc plate **16**. In the latter case, a flexible sheet-like material, which is made of a synthetic resin and a large quantity of carbon powder mixed together into a paste and rolled into a thin film by a press roller, has been used as the conductive carbon coat **15**. The thus formed conductive carbon coat **15** has a smooth surface like that of a reduction roll rolled into a sheet-like form by the heat press roller.

The conventional bonded electrode with the above-mentioned structure has the following problem when the zinc sheet that has been bonded to the conductive carbon coat is punched into a prescribed shape by a press. That is, when a chute is installed below the die of the press in order to enhance the work efficiency in transporting the bonded electrodes from the press to the next process, if the bonded electrodes are continuously fed through the chute by the pressure of the press so that the bonded electrodes are aligned properly in the chute with their top and bottom surfaces facing the respectively specified sides, the bonded electrodes will become firmly pressed together and stick to each other via the soft conductive carbon coat, thus causing the problem that they do not separate from each other when delivered to the next process.

To avoid this problem, the previous method to prevent the electrodes from sticking to each other was by attaching paper to the surface of the zinc plate or to avoid application of pressure by punching the electrodes one by one without using a chute.

Moreover, the layered-type manganese dry battery has such a structure that more than one unit cell of the same type is stacked one above another to obtain a high output voltage. In such a battery, it is required to reduce the contact resistance between the unit cells and to maintain the low contact resistance not only during discharge but also when the battery is out of use and stored on a shelf. It is also required, particularly under a high load discharge condition, that the conductive carbon coat has the largest possible conductivity and current collecting property within a limited contact area.

### SUMMARY OF THE INVENTION

The layered-type manganese dry battery of the present invention, which overcomes the above-discussed and numerous other disadvantages and deficiencies of the prior art, comprises a positive electrode composition, formed in a pellet shape, consisting essentially of manganese dioxide, conductive material, and electrolyte; a separator of a cup-like shape surrounding the positive electrode composition, said separator absorbing and holding the electrolyte by itself; and a zinc-carbon bonded electrode made of a conductive carbon coat integrally bonded to one side of a flat zinc negative electrode, the other side facing the positive electrode composition so as to sandwich the separator therebetween, the zinc-carbon bonded electrode being provided with protrusions made of conductive carbon on the surface of the conductive carbon coat formed on the outer surface of the flat zinc negative electrode.

In a preferred embodiment, the protrusions formed on the surface of the conductive carbon coat have a height of 0.05 to 0.15 mm.

Alternatively, the layered-type manganese dry battery of the present invention comprises a positive electrode composition, formed in a pellet shape, consisting essentially of manganese dioxide, conductive material, and electrolyte; a separator of a cup-like shape surrounding the positive electrode composition, said separator absorbing and holding the electrolyte by itself; and a zinc-carbon bonded electrode made of a conductive carbon coat of 0.10 to 0.30 mm thickness formed of a synthetic resin and carbon powder integrally bonded to one side of a flat zinc negative electrode, the other side facing the positive electrode composition so as to sandwich the separator therebetween, the zinc-carbon bonded electrode being provided with protrusions made of conductive carbon on the surface of the conductive carbon coat on the outer surface of the flat zinc negative electrode, the protrusions having a height of 30 to 70% of the thickness of the carbon coat.

The method of manufacturing a zinc-carbon bonded electrode for use in the layered-type manganese dry battery of the present invention, which overcomes the above-discussed and numerous other disadvantages and deficiencies of the prior art, comprises bonding a conductive carbon coat formed of a synthetic resin and carbon powder in an integral fashion to one side of a zinc sheet, forming protrusions made of conductive carbon on the surface of said conductive carbon coat, and punching said integrally bonded conductive carbon coat into a prescribed shape by press.

Alternatively, the method of manufacturing a zinc-carbon bonded electrode for use in the layered-type manganese dry battery of the present invention comprises forming protrusions on the surface of a conductive carbon coat formed of a synthetic resin and carbon powder, bonding said conductive carbon coat provided with the protrusions made of conductive carbon on the surface thereof in an integral fashion to one side of a zinc sheet, and punching said integrally bonded conductive carbon coat into a prescribed shape by press.

Thus, the invention described herein makes possible the objectives of (1) providing a layered-type manganese dry battery in which bonded electrodes are prevented from sticking to each other when they are punched into a prescribed shape by a press; (2) providing a layered-type manganese dry battery in which a contact resistance between the conductive carbon coat of the bonded electrode and the positive electrode composition is reduced in a layered manganese and the low contact resistance is maintained; and (3) providing a layered-type manganese dry battery that attains an excellent current collecting performance particularly under high load discharging.

### BRIEF DESCRIPTION OF THE DRAWINGS

This invention may be better understood and its numerous objects and advantages will become apparent to those skilled in the art by reference to the accompanying drawings as follows:
Figure 1 is a cross sectional view of a layered-type manganese dry battery of 6F22 type manufactured in accordance with the present invention;
Figure 2 is a cross sectional view of a unit cell constituting part of the layered-type manganese dry battery shown in Figure 1;
Figure 3 is a cross sectional view of a bonded electrode according to one embodiment of the present invention;
Figure 4 is a front view of an enlarged portion of the bonded electrode of Figure 3;
Figure 5 is a front view of the bonded electrode of Figure 4 viewed from the conductive carbon coat side;
Figure 6 is a cross sectional view of a conventional bonded electrode; and
Figure 7 is a schematic diagram showing a method of manufacturing a bonded electrode according to the present invention.

### DESCRIPTION OF THE PREFERRED EMBODIMENTS

The present invention provides a layered-type manganese dry battery that is manufactured by bonding a conductive carbon coat to a zinc plate in an integral fashion and then forming protrusions on the surface of the conductive carbon coat that comes into contact with the positive electrode composition of the bonded electrode, or by bonding a conductive carbon coat which surface has been roughened in advance, to a zinc plate in an integral fashion.

The forming of protrusions on the surface is accomplished, for example, by press-forming the soft conductive carbon surface by a press roller having an embossed roller face, to form the surface with a pattern of protrusions having a 0.05 to 0.15 mm height.

As compared with a conventional method, when the bonded electrodes are punched into a prescribed shape by a press with a chute installed to its die, the pattern of protrusions serves to reduce the press-contact area between the bonded electrodes, and also to secure the air flow between the adjacent bonded electrodes in the chute. As a result, the bonded electrodes are less likely to stick to each other.

Moreover, since the protrusions on the roughened surface of the conductive carbon coat stick into the adjacent positive electrode composition, the contact resistance is reduced with a resultant reduction in the internal resistance of the battery. Furthermore, with the protrusions sticking into the positive electrode composition, it is easy to maintain the initial contact resistance regardless of the volume change of the positive electrode composition caused during discharging.

Moreover, since the roughened surface of the conductive carbon coat serves to increase the contact area with the positive electrode composition of the adjacent unit cell, the current collecting property is also enhanced.

Referring to the accompanying drawings, we will now describe the preferred embodiments of the present invention by way of example using a conductive carbon coat with a thickness of 0.2 mm made of a paste of the mixture shown in Table 1.

### Example 1

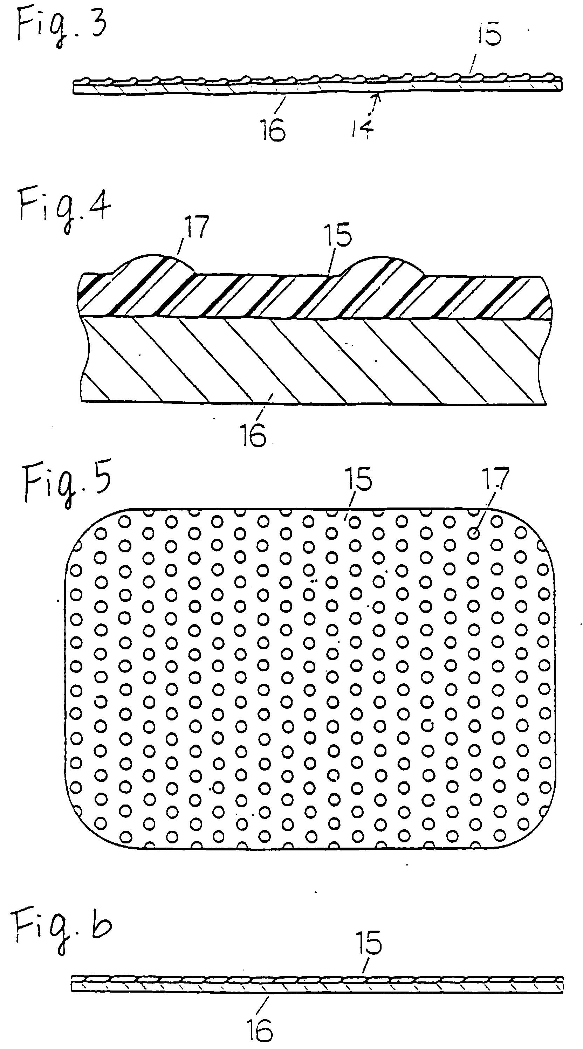

A 6F22 type dry battery comprising cells each having a bonded electrode which, as shown in Figures 3 to 5, is made of a conductive carbon coat **15** integrally bonded to a zinc plate **16**, the surface of the conductive carbon coat **15** being treated so as to form thereon a pattern of semispherically-shaped protrusions 0.16 mm in height and 0.5 mm in diameter arranged at intervals of 0.5 mm.

### Example 2

A 6F22 type dry battery comprising cells each having a bonded electrode of Example 1, wherein the surface of the conductive carbon coat **15** is treated so as to form thereon a pattern of protrusions 0.14 mm in height.

### Example 3

A 6F22 type dry battery comprising cells each having a bonded electrode of Example 1, wherein the surface of the conductive carbon coat **15** is treated so as to form thereon a pattern of protrusions 0.12 mm in height.

### Example 4

A 6F22 type dry battery comprising cells each having a bonded electrode of Example 1, wherein the surface of the conductive carbon coat **15** is treated so as to form thereon a pattern of protrusions 0.10 mm in height.

### Example 5

A 6F22 type dry battery comprising cells each having a bonded electrode of Example 1, wherein the surface of the conductive carbon coat **15** is treated so as to form thereon a pattern of protrusions 0.08 mm in height.

### Example 6

A 6F22 type dry battery comprising cells each having a bonded electrode of Example 1, wherein the surface of the conductive carbon coat **15** is treated so as to form thereon a pattern of protrusions 0.06 mm in height.

### Example 7

A 6F22 type dry battery comprising cells each having a bonded electrode of Example 1, wherein the surface of the conductive carbon coat **15** is treated so as to form thereon a pattern of protrusions 0.04 mm in height.

### Example 8

A 6F22 type dry battery comprising cells each having a bonded electrode of Example 1, wherein the surface of the conductive carbon coat **15** is treated so as to form thereon a pattern of protrusions 0.02 mm in height.

### Comparative example

A 6F22 type dry battery comprising cells each having a conventional bonded electrode with no roughing treatment on the surface of the conductive carbon coat **15**.

**Table 1**

| materials | proportion (parts) |
|---|---|
| carbon powder | 75 |
| butyle rubber | 23 |
| plasticizer | 2 |

**Table 2**

| | Height of protrusions | Internal resistance (the number of samples is 20) | 50 mA constant continuous discharge current (the number of samples is 5) | The number of abnormal discharge when discharged with a 620 Ω load for 2 hours per day |
|---|---|---|---|---|
| Example 1 | 0.16 mm | 9.3 Ω | 255 min | 0 out of 20 |
| Example 2 | 0.14 mm | 9.5 Ω | 252 min | 0 out of 20 |
| Example 3 | 0.12 mm | 9.4 Ω | 250 min | 0 out of 20 |
| Example 4 | 0.10 mm | 9.4 Ω | 248 min | 0 out of 20 |
| Example 5 | 0.08 mm | 9.9 Ω | 241 min | 0 out of 20 |
| Example 6 | 0.06 mm | 9.9 Ω | 223 min | 1 out of 20 |
| Example 7 | 0.04 mm | 10.5 Ω | 210 min | 2 out of 20 |
| Example 8 | 0.02 mm | 11.0 Ω | 195 min | 4 out of 20 |
| Comparative example | 0.0 mm | 11.3 Ω | 198 min | 5 out of 20 |

Table 2 shows the results of experiments conducted on the dry batteries described in Examples 1 to 8 of the present invention and in comparative example, the results showing the internal resistance, the continuous discharge time with 50 mA constant current (until the voltage drops to 5.4 V), and the number of batteries, out of 20 batteries in each example, which suffered abnormal discharge due to contact failure between the unit cells when discharged with a load of 620 Ω for two hours per day after three months' storage at 45°C.

As is apparent from Table 2, the present invention attains the effect that the contact resistance between the positive electrode composition and the conductive carbon coat is reduced, significantly increasing the discharge performance under a high load discharge condition. Moreover, since the protrusions formed on the surface of the conductive carbon coat stick into the positive electrode composition of the adjacent unit cell, a good contact resistance can be maintained during discharge, the effect being particularly remarkable in discharging after storage.

These effects are remarkable in Examples 1 to 6, but no appreciable effects have been noted in Examples 7 and 8 in which the surface of the conductive carbon coat has lower protrusions. On the other hand, when the protrusions of a height greater than 0.16 mm are provided, the breakage of the conductive carbon coat occurs, which is not desirable in constructing the battery.

Furthermore, in Examples 1 to 5, it was found that when bonded electrodes are manufactured by punching with a press to which a chute is installed, no adhesion occurs between the bonded electrodes, the bonded electrodes come out separated from each other, facilitating smooth delivery to the next process.

## Claims

1. A layered-type manganese dry battery comprising a plurality of unit cells (7) stacked one above another to form a cell stack, each unit cell (7) comprising:
- a positive electrode composition (11), formed in a pellet shape and consisting essentially of manganese dioxide, conductive material, and electrolyte;
- a separator (13) of a cup-like shape surrounding the positive electrode composition (11), said separator (13) absorbing and holding the electrolyte by itself, and
- a zinc-carbon bonded electrode (14) made of a conductive carbon coat (15) integrally bonded to one side of a flat zinc negative electrode (16), the other side facing the positive electrode composition (11) so as to sandwich the separator (13) therebetween,
**characterized in that**
- the zinc-carbon bonded electrode (14) is provided with protrusions made of conductive carbon on the surface of the conductive carbon coat (15) formed on the outer surface of the flat zinc negative electrode (16).

2. A layered-type manganese dry battery according to claim 1, wherein the protrusions formed on the surface of the conductive carbon coat have a height of 0.05 to 0.15 mm.

3. A layered-type manganese dry battery comprising a plurality of unit cells (7) stacked one above another to form a cell stack, each unit cell (7) comprising:
- a positive electrode composition (11), formed in a pellet shape and consisting essentially of manganese dioxide, conductive material, and electrolyte;
- a separator (13) of a cup-like shape surrounding the positive electrode composition (11), said separator (13) absorbing and holding the electrolyte by itself; and
- a zinc-carbon bonded electrode (14) made of a conductive carbon coat (15) of 0,10 to 0,30 mm thickness formed of a synthetic resin and carbon powder integrally bonded to one side of a flat zinc negative electrode (16), the other side facing the positive electrode composition (11) so as to sandwich the separator (13) therebetween,
**characterized in that**
- the zinc-carbon bonded electrode (14) is provided with protrusions made of conductive carbon on the surface of the conductive carbon coat (15) on the outer surface of the flat zinc negative electrode (16), the protrusions having a height of 30 to 70 % of the thickness of the carbon coat (15).

4. A method of manufacturing a zinc-carbon bonded electrode for use in a layered-type manganese dry battery comprising bonding a conductive carbon coat formed of a synthetic resin and carbon powder in an integral fashion to one side of a zinc sheet, forming protrusions made of conductive carbon on the surface of said conductive carbon coat, and punching said integrally bonded conductive carbon coat into a prescribed shape by press.

5. A method of manufacturing a zinc-carbon bonded electrode for use in a layered-type manganese dry battery comprising forming protrusions on the surface of a conductive carbon coat formed of a synthetic resin and carbon powder, bonding said conductive carbon coat provided with the protrusions made of conductive carbon on the surface thereof in an integral fashion to one side of a zinc-sheet, and punching said integrally bonded conductive carbon coat into a prescribed shape by press.

## Patentansprüche

1. In Schichten aufgebaute Mangan-Trockenbatterie umfassend eine Vielzahl von Zelleneinheiten (7), die zur Bildung eines Zellenstapels übereinandergestapelt sind, wobei jede Zelleneinheit (7) umfaßt:
eine positive, in Pelletform ausgebildet Elektrodenzusammensetzung (11), die im wesentlichen aus Mangandioxid, leitfähigem Material und Elektrolyten besteht;
einen Separator (13) in Becherform, der die positive Elektrodenzusammensetzung (11) umgibt, wobei der Separator (13) den Elektrolyten absorbiert und diesen selbst hält; und
eine Zink-Kohlenstoff-Verbundelektrode (14), die aus einer leitfähigen Kohlenstoffummantelung (15) hergestellt ist, die einstückig mit einer Seite einer flachen negativen Zinkelektrode (16) verbunden ist, deren andere Seite auf die positive Elektrodenzusammensetzung (11) zugewandt ist, um so den Separator (13) dazwischen einzuschließen,
**dadurch gekennzeichnet**, daß
die Zink-Kohlenstoff-Verbundelektrode (14) mit Vorsprüngen aus leitfähigem Kohlenstoff auf der Oberfläche der leitfähigen Kohlenstoffummantelung (15) versehen ist, die auf der äußeren Oberfläche der flachen negativen Zinkelektrode (16) ausgebildet sind.

2. In Schichten aufgebaute Mangan-Trockenbatterie nach Anspruch 1, bei der die Vorsprünge auf der Oberfläche der leitfähigen Kohlenstoffummantelung eine Höhe von 0,05 bis 0,15 mm aufweisen.

3. In Schichten aufgebaute Mangan-Trockenbatterie umfassend eine Vielzahl von Zelleneinheiten (7), die zur Bildung eines Zellenstapels übereinandergestapelt sind, wobei jede Zelleneinheit (7) umfaßt:
eine positive, in Pelletform ausgebildet Elektrodenzusammensetzung (11), die im wesentlichen aus Mangandioxid, leitfähigem Material und Elektrolyten besteht;
einen Separator (13) in Becherform, der die positive Elektrodenzusammensetzung (11) umgibt, wobei der Separator (13) den Elektrolyten absorbiert und diesen selbst hält; und
eine Zink-Kohlenstoff-Verbundelektrode (14), die aus einer leitfähigen Kohlenstoffummantelung (15) mit einer Dicke von 0.10 bis 0.30 mm aus Kunstharz und Kohlenstoffpulver hergestellt ist, die einstückig mit einer Seite einer flachen negativen Zinkelektrode (16) verbunden ist, deren andere Seite auf die positive Elektrodenzusammensetzung (11) zugewandt ist, um so den Separator (13) dazwischen einzuschließen,
**dadurch gekennzeichnet**, daß
die Zink-Kohlenstoff-Verbundelektrode (14) mit Vorsprüngen aus leitfähigem Kohlenstoff auf der Oberfläche der leitfähigen Kohlenstoffummantelung (15) auf der äußeren Oberfläche der flachen negativen Zinkelektrode (16) versehen ist, wobei die Vorsprünge eine Höhe von 30 bis 70 % der Dicke der Kohlenstoffummantelung (15) aufweisen.

4. Verfahren zur Herstellung einer Zink-Kohlenstoff-Verbundelektrode zur Verwendung in einer in Schichten aufgebauten Mangan-Trockenbatterie, umfassend das einstückige Verbinden einer aus Kunstharz und Kohlenstoffpulver ausgebildeten leitfähigen Kohlenstoffummantelung mit einer Seite einer Zinkplatte, das Ausbilden von Vorsprüngen aus leitfähigem Kohlenstoff auf der Oberfläche der leitfähigen Kohlenstoffummantelung, und das Stanzen der einstückig verbundenen leitfähigen Kohlenstoffummantelung in eine vorbestimmte Form mittels Presse.

5. Verfahren zur Herstellung einer Zink-Kohlenstoff-Verbundelektrode zur Verwendung in einer in Schichten aufgebauten Mangan-Trockenbatterie umfassend das Ausbilden von Vorsprüngen auf der Oberfläche einer aus Kunstharz und Kohlenstoffpulver ausgebildeten leitfähigen Kohlenstoffummantelung, das einstückige Verbinden der mit Vorsprüngen aus leitfähigem Kohlenstoff auf ihrer Oberfläche versehenen leitfähigen Kohlenstoffummantelung mit einer Seite einer Zinkplatte, und das Stanzen der einstückig verbundenen leitfähigen Kohlenstoffummantelung in eine vorbestimmte Form mittels Presse.

## Revendications

1. Batterie sèche au manganèse, du type en couches, comportant plusieurs cellules unitaires (7) empilées l'une au-dessus de l'autre pour former une pile de cellules, chaque cellule unitaire (7) comprenant:
- une composition d'électrode positive (11) configurée en forme de pastilles et constituée essentiellement de dioxyde de manganèse, d'un matériau conducteur et d'un électrolyte;
- un séparateur en forme de cuvette (13), entourant la composition d'électrode positive (11), ledit séparateur (13) absorbant et retenant de lui-même l'électrolyte, et
- une électrode composite en zinc-carbone (14), constituée d'une couche de carbone conducteur (15) intégrée sur un côté d'une électrode négative plate en zinc (16) dont l'autre côté fait face à la composition d'électrode positive (11) de telle sorte que le séparateur (13) est intercalé entre elles,
caractérisée en ce que
- à la surface de la couche de carbone conducteur (15) formée sur la surface externe de l'électrode négative plate (16) en zinc, l'électrode composite (14) en zinc-carbone est pourvue de saillies réalisées en carbone conducteur.

2. Batterie sèche au manganèse, du type en couches, selon la revendication 1, dans laquelle les saillies formées à la surface de la couche de carbone conducteur présentent une hauteur de 0,05 à 0,15 mm.

3. Batterie sèche au manganèse du type en couches, comportant plusieurs cellules unitaires (7) empilées l'une au-dessus de l'autre pour former un empilement de cellules, chaque cellule unitaire (7) comprenant:
- une composition d'électrode positive (11) configurée en forme de pastilles et constituée essentiellement de dioxyde de manganèse, d'un matériau conducteur et d'un électrolyte;
- un séparateur en forme de cuvette (13) entourant la composition d'électrode positive (11), ledit séparateur (13) absorbant et retenant de lui-même l'électrolyte; et
- une électrode composite en zinc-carbone (14), constituée d'une couche de carbone conducteur (15) d'une épaisseur de 0,10 à 0,30 mm, formée d'une résine synthétique et de poudre de carbone intégrées sur un côté d'une électrode négative plate en zinc (16) dont l'autre côté fait face à la composition d'électrode positive (11) de telle sorte que le séparateur (13) est intercalé entre elles,
caractérisée en ce que
- à la surface externe de l'électrode négative plate en zinc (16), l'électrode composite en zinc-carbone (14) est pourvue de saillies réalisées en carbone conducteur à la surface de la couche de carbone conducteur (15), les saillies présentant une hauteur valant 30 à 70% de l'épaisseur de la couche de carbone (15).

4. Procédé de fabrication d'une électrode composite en-zinc-carbone pour utilisation dans une batterie sèche au manganèse du type en couches, comprenant les étapes consistant à assembler une couche de carbone conducteur formée d'une résine synthétique et d'une poudre de carbone, de manière à l'intégrer sur un côté d'une tôle de zinc, former des saillies constituées de carbone conducteur à la surface de ladite couche de carbone conducteur, et emboutir à la presse, en une forme prescrite, ladite couche de carbone conducteur intégrée.

5. Procédé de fabrication d'une électrode composite en zinc-carbone pour utilisation dans une batterie sèche au manganèse du type en couches, comprenant les étapes consistant à former des saillies à la surface d'une couche de carbone conducteur formée d'une résine synthétique et de poudre de carbone, intégrer ladite couche de carbone conducteur munie à sa surface des saillies réalisées en carbone conducteur sur un côté d'une tôle de zinc, et emboutir à la presse, en une forme prescrite, ladite couche de carbone conducteur intégrée.
